# EUROPEAN PATENT APPLICATION

(11) **EP 4 708 915 A1**
(43) Date of publication of application: **11.03.2026**
(21) Application number: 24894748.3
(22) Date of filing: 13.11.2024
(51) Int. Cl.: H04R 3/12, H04R 5/04, G06F 3/01

(54) **ELECTRONIC DEVICE AND CONTROL METHOD THEREOF**

(30) Priority: 23.11.2023 KR 20230164091
(71) Applicant: Samsung Electronics Co., Ltd., Suwon-si, Gyeonggi-do 16677 (KR)
(72) Inventor: LIM, Donghyun, Suwon-si Gyeonggi-do 16677 (KR); LEE, Yoonjae, Suwon-si Gyeonggi-do 16677 (KR); KIM, Jongwoo, Suwon-si Gyeonggi-do 16677 (KR); KIM, Sunmin, Suwon-si Gyeonggi-do 16677 (KR); KIM, Hanki, Suwon-si Gyeonggi-do 16677 (KR)
(74) Representative: Appleyard Lees IP LLP
(86) International application number: PCT/KR2024/096511
(87) International publication number: WO 2025/110858

(57) **Abstract**

An electronic apparatus including a detection device configured to detect a user around the electronic apparatus; a plurality of speakers spaced apart from each other; an audio output device configured to generate an audio signal to be provided to each of the plurality of speakers, and provide the generated audio signal to at least one of the plurality of speakers; and a processor configured to control the audio output device to generate the audio signal corresponding to each speaker by using mapping information of a channel to be output through each of the plurality of speakers, wherein the processor is configured to control the audio output device by selectively using one mapping information of first mapping information provided based on locations of the plurality of speakers or second mapping information provided based on a user location, based on the user location detected by the detection device.

## Description

### [Technical Field]

The present disclosure relates to an electronic apparatus and a controlling method thereof, and more particularly, to an electronic apparatus that may change an output channel of each speaker based a user location or a user selection, and a controlling method thereof.

### [Background Art]

A recent electronic apparatus may include a speaker for outputting a voice and/or sound, and equipped with the plurality of speakers to output music with a plurality of channels.

In case of including the plurality of speakers, the electronic apparatus may output music by providing a channel corresponding to each of the plurality of speakers, assuming that a user is located in front of the electronic apparatus. For example, in case of including two speakers, the electronic apparatus may output a left audio signal through a left speaker and a right audio signal through a right speaker.

### [Disclosure]

### [Technical Solution]

According to an embodiment of the present disclosure, an electronic apparatus may include a detection device configured to detect at least one user location, a plurality of speakers spaced apart from each other, an audio output device configured to generate audio signals, and a processor configured to control the audio output device to, based on the at least one user location detected by the detection device, select (a) mapping information for mapping at least one channel to be output through the plurality of speakers based on locations of the plurality of speakers, or (a) mapping information for mapping at least one channel to be output through at least one speaker of the plurality of speakers based on the at least one user location detected by the detection device. The processor may further be configured to control the audio output device to generate, based on the selected mapping information, at least one audio signal to be output through at least one speaker of the plurality of speakers that is determined based on the selected mapping information, and provide the generated at least one audio signal to the determined at least one speaker so that the generated at least one audio signal is output through the determined at least one speaker.

According to an embodiment of the present disclosure, the processor may be configured to control the audio output device to, based on the at least one user location detected by the detection device being in a predetermined listening region, select the mapping information for mapping the at least one channel to be output through the plurality of speakers based on locations of the plurality of speakers, and, based on the at least one user location detected by the detection device not being in the predetermined listening region, select the mapping information for mapping at least one channel to be output through at least one speaker of the plurality of speakers based on the at least one user location detected by the detection device.

According to an embodiment of the present disclosure, the processor may be configured to, based on the at least one user location detected by the detection device not being in the predetermined listening region, (a) control the audio output device to generate, based on the selected mapping information, a mixed audio signal to be output through a speaker corresponding to the at least one user location detected by the detection device among the plurality of speakers, and provide the generated mixed audio signal to the speaker corresponding to the at least one user location detected by the detection device, and (b) control the audio output device so that no audio signal is output through remaining speakers of the plurality of speakers.

According to an embodiment of the present disclosure, the plurality of speakers may include a first speaker on a left side of the electronic apparatus, and a second speaker on a right side of the electronic apparatus, and the processor may be configured to (a) based on the at least one user location detected by the detection device being in the predetermined listening region, control the audio output device to generate an the audio signal of a left channel to be output through the first speaker, provide the generated audio signal of the left channel to the first speaker, generate an audio signal of a right channel to be output through the second speaker, and provide the generated audio signal of the right channel to the second speaker, and (b) based on the at least one user location detected by the detection device being in a left region outside of the predetermined listening region, control the audio output device to generate an audio signal that mixes the audio signal of the left channel and the audio signal of the right channel to be output through the first speaker, and provide the generated audio signal that mixes the audio signal of the left channel and the audio signal of the right channel to the first speaker, and control the audio output device so that no sound is output through the second speaker.

According to an embodiment of the present disclosure, the electronic apparatus may further include a communication device configured to communicate with a speaker device that is external to the electronic apparatus, and the processor may be configured to control the audio output device to, based on the at least one user location detected by the detection device not being in the predetermined listening region, generate an audio signal of a first channel to be output through a speaker corresponding to the at least one user location detected by the detection device among the plurality of speakers, and provide the generated audio signal of the first channel to the speaker corresponding to the at least one user location detected by the detection device, and generate an audio signal of a second channel to be output through the speaker device, and provide the generated audio signal of the second channel via the communication device to the speaker device.

According to an embodiment of the present disclosure, the processor may be configured to control the communication device to transmit data corresponding to the generated audio signal of the second channel to the speaker device.

According to an embodiment of the present disclosure, the at least one user location detected by the detection device incudes a plurality of user locations, and the processor may be configured to control the audio output device to (a) based on the plurality of user locations detected by the detection device, select the mapping information for mapping at least one channel to be output through at least one speaker of the plurality of speakers based on the at least one user location detected by the detection device, (b) generate, based on the selected mapping information, a mixed audio signal that mixes a plurality of channels to be output through each speaker of the plurality of speakers, and (c) provide the generated mixed audio signal to each speaker of the plurality of speakers so that the generated mixed audio signal is output through each speaker of the plurality of speakers.

According to an embodiment of the present disclosure, the electronic apparatus may further include a communication device configured to communicate with a speaker device that is external to the electronic apparatus, and the processor may be configured to (a) set the speaker device and at least one first speaker among the plurality of speakers as a speaker group based on a location of the speaker device, and (b) control the audio output device to (i) generate an audio signal of a first channel to be output through the at least one first speaker, and provide the generated audio signal of the first channel to the at least one first speaker, (ii) generate an audio signal of a second channel to be output through the speaker device, and provide the generated audio signal of the second channel, via the communication device, to the speaker device, (iii) generate a mixed audio signal that mixes the first channel and the second channel to be output through remaining speakers that do not belong to the speaker group among the plurality of speakers, and provide the mixed audio signal to the remaining speakers.

According to an embodiment of the present disclosure, the electronic apparatus may further include a communication device configured to communicate with each of a first speaker device and a second speaker device that are external to the electronic apparatus, and the processor may be configured to control the audio output device to, based on the at least one user location detected by the detection device being spaced apart from the electronic apparatus and close to the first speaker device and the second speaker device, (a) generate an audio signal of a first channel to be output through the first speaker device and provide, via the communication device, the audio signal of the first channel to the first speaker device, and (b) generate an audio signal of a second channel to be output through the second speaker device and provide, via the communication device, the audio signal of the second channel to the second speaker device.

According to an embodiment of the present disclosure, the processor may be configured to control the audio output device to, based on the at least one user location detected by the detection device being spaced apart from the electronic apparatus and close to the first speaker device and the second speaker device, output no sound through the plurality of speakers.

According to an embodiment of the present disclosure, the mapping information for mapping at least one channel to be output through the plurality of speakers based on locations of the plurality of speakers, and the mapping information for mapping at least one channel to be output through at least one speaker of the plurality of speakers based on the at least one user location detected by the detection device, each include at least one of playback bandwidth information, level information, or a gain feature to be output through each of the plurality of speakers.

According to an embodiment of the present disclosure, the detection device may include at least one of a microphone that detects a user location based on a user speech location, a camera, an ultra-wideband communication device (UWB) communication device that communicates with a user terminal device, or a light detection and ranging sensor (LiDAR) sensor.

According to an embodiment of the present disclosure, a method for controlling an electronic apparatus is provided, where the electronic apparatus includes a detection device configured to detect at least one user location, a plurality of speakers spaced apart from each other, and an audio output device configured to generate audio signals. The method may include controlling the audio output device to, based on the at least one user location detected by the detection device, select (a) mapping information for mapping at least one channel to be output through the plurality of speakers based on locations of the plurality of speakers, or (a) mapping information for mapping at least one channel to be output through at least one speaker of the plurality of speakers based on the at least one user location detected by the detection device. The method may further include controlling the audio output device to generate, based on the selected mapping information, at least one audio signal to be output through at least one speaker of the plurality of speakers that is determined based on the selected mapping information, and provide the generated at least one audio signal to the determined at least one speaker so that the generated at least one audio signal is output through the determined at least one speaker.

According to an embodiment of the present disclosure, a non-transitory computer-readable recording medium may be provided and which stores a program for executing a process for controlling an electronic apparatus that includes a detection device configured to detect at least one user location, a plurality of speakers spaced apart from each other, and an audio output device configured to generate audio signals. The process may include controlling the audio output device to, based on the at least one user location detected by the detection device, select (a) mapping information for mapping at least one channel to be output through the plurality of speakers based on locations of the plurality of speakers, or (b) mapping information for mapping at least one channel to be output through at least one speaker of the plurality of speakers based on the at least one user location detected by the detection device. The process may further include controlling the audio output device to generate, based on the selected mapping information, at least one audio signal to be output through at least one speaker of the plurality of speakers that is determined based on the selected mapping information, and provide the generated at least one audio signal to the determined at least one speaker so that the generated at least one audio signal is output through the determined at least one speaker.

### [Description of Drawings]

The above or other aspects, features, or benefits of embodiments in the present disclosure will be more apparent by the description provided below with reference to the accompanying drawings. In the accompanying drawings:
FIG. 1 is a diagram showing an operation of an electronic apparatus according to one or more embodiments of the present disclosure;
FIG. 2 is a block diagram showing a configuration of the electronic apparatus according to one or more embodiments of the present disclosure;
FIG. 3 is a block diagram showing a configuration of the electronic apparatus according to one or more embodiments of the present disclosure;
FIG. 4 is a diagram showing an arrangement example of a plurality of speakers according to one or more embodiments of the present disclosure;
FIG. 5 is a diagram showing a channel mapping example according to one or more embodiments of the present disclosure;
FIG. 6 is a diagram showing a channel mapping example according to one or more embodiments of the present disclosure;
FIG. 7 is a diagram showing a channel mapping example according to one or more embodiments of the present disclosure;
FIG. 8 is a diagram showing a channel mapping example according to one or more embodiments of the present disclosure;
FIG. 9 is a diagram showing a channel mapping example according to one or more embodiments of the present disclosure;
FIG. 10 is a diagram showing a channel mapping example according to one or more embodiments of the present disclosure; and
FIG. 11 is a flow chart showing a controlling method according to one or more embodiments of the present disclosure.

### [Mode for Invention]

The present disclosure may be variously modified and have several embodiments, and specific embodiments of the present disclosure are thus shown in the drawings and described in detail in the detailed description. However, it is to be understood that the scope of the present disclosure is not limited to the specific embodiments, and includes various modifications, equivalents, and/or alternatives according to the embodiments of the present disclosure. Throughout the accompanying drawings, similar components are denoted by similar reference numerals.

In describing the present disclosure, if it is decided that detailed descriptions of the known functions or configurations related to the present disclosure may unnecessarily obscure the gist of the present disclosure, the detailed descriptions thereof are omitted.

In addition, the following embodiments may be modified in several different forms, and the scope and spirit of the present disclosure are not limited to the following embodiments. Rather, these embodiments are provided to make the present disclosure thorough and complete, and completely transfer the spirit of the present disclosure to those skilled in the art.

Terms used in the present disclosure are used only to describe the specific embodiments rather than limiting the scope of the present disclosure. Here, a term of a singular number includes its plural number unless explicitly interpreted otherwise in the context.

In the present disclosure, an expression "have", "may have", "include", "may include", or the like indicates the existence of a corresponding feature (for example, a numerical value, a function, an operation or a component such as a part), and does not exclude the existence of an additional feature.

In the present disclosure, an expression "A or B", "at least one of A and/or B", "one or more of A and/or B", "at least one of A, B, or C", "at least one of A, B or C", "at least one of A, B, and C", "at least one of A, B and C", or the like, may include all possible combinations of items enumerated together. For example, "A or B", "at least one of A and B", or "at least one of A or B" may indicates all of 1) a case where at least one A is included, 2) a case where at least one B is included, or 3) a case where both of at least one A and at least one B are included.

Expressions "first", "second", and the like used in the present disclosure, may indicate various components regardless of the sequence and/or importance of the components. These expressions are used only to distinguish one component and another component from each other, and do not limit the corresponding components.

In case that any component (for example, a first component) is mentioned to be "(operatively or communicatively) coupled with/to" or "connected to" another component (for example, a second component), it is to be understood that any component is directly coupled to another component or may be coupled to another component through still another component (for example, a third component).

On the other hand, in case that any component (for example, the first component) is mentioned to be "directly coupled to" or "directly connected to" another component (for example, the second component), it is to be understood that still another component (for example, the third component) is not present between any component and another component.

An expression "configured (or set) to" used in the present disclosure may be replaced by an expression "suitable for", "having the capacity to", "designed to", "adapted to", "made to", or "capable of" based on a context. A term "configured (or set) to" may not necessarily mean "specifically designed to" in hardware.

Rather, an expression "a device configured to" in some contexts may indicate that the device may "perform-" together with another device or component. For example, "a processor configured (or set) to perform A, B and C" may indicate a dedicated processor (for example, an embedded processor) for performing a corresponding operation or a generic-purpose processor (for example, a central processing unit (CPU) or an application processor) that may perform a corresponding operation by executing one or more software programs stored in a memory device.

In the embodiments, a "module" or a "~er/or" may perform at least one function or operation, and be implemented by hardware or software or be implemented by a combination of hardware and software. In addition, a plurality of "modules" or a plurality of "~ers/ors" may be integrated with each other in at least one module and implemented by at least one processor except for a "module" or an "~er/or" that needs to be implemented in specific hardware.

Operations performed by the modules, the programs, or other components according to the various embodiments may be executed in a sequential manner, a parallel manner, an iterative manner, or a heuristic manner, at least some of the operations may be performed in a different order or may be omitted, or other operations may be added.

Meanwhile, the various elements and regions in the drawings are schematically shown. Therefore, the spirit of the present disclosure is not limited by relative sizes or intervals shown in the accompanying drawings.

Meanwhile, an electronic apparatus according to the various embodiments of the present disclosure may include, for example, at least one of a smartphone, a tablet personal computer (PC), a desktop PC, a laptop PC, a home theater, or a sound bar.

In some embodiments, the electronic apparatus may include, for example, at least one of a television, a digital video disk (DVD) player, an audio player, a refrigerator, an air conditioner, a vacuum cleaner, an oven, a microwave oven, a washing machine, an air purifier, a robot cleaner, a set-top box, a home automation control panel, a security control panel, a media box (e.g., Samsung HomeSync^{™}, Apple TV^{™} or Google TV^{™}), a game console (e.g., Xbox^{™} or PlayStation^{™}), an electronic dictionary, an electronic key, a camcorder, or an electronic picture frame. The above-described device example is an example, and the electronic apparatus may be any device including a plurality of speakers.

Hereinafter, the embodiments of the present disclosure are described in detail with reference to the accompanying drawings so that those skilled in the art to which the present disclosure pertains may easily practice the present disclosure.

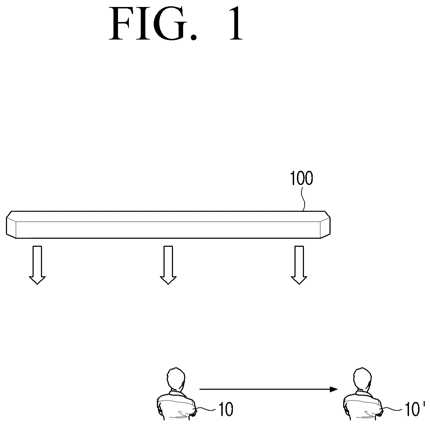

FIG. 1 is a diagram showing an operation of an electronic apparatus according to one or more embodiments of the present disclosure.

FIG. 1 shows an electronic apparatus 100. The electronic apparatus 100 may include a plurality of speakers, and output audio signals such as movie content, music content, and game content by using the plurality of speakers. The electronic apparatus 100 may have a sound bar shape as shown in the drawing, and may be implemented to have a different shape in implementation.

If the electronic apparatus 100 includes the plurality of speakers, each speaker may generally perform its operation based on a predefined channel role.

For example, if the speakers of the electronic apparatus 100 includes a left speaker, a center speaker, and a right speaker, the channel role may be defined in such a way that the left speaker outputs the audio signal corresponding to a left channel, the center speaker outputs the audio signal corresponding to the left and right channels (i.e., a voice or center channel), and the right speaker outputs the audio signal corresponding to the right channel.

Here, the channel indicates a position of each audio source in the audio signal. For example, a stereo channel may include two audio sources (i.e., left audio source and right audio source). That is, the number of channels may indicate the number of audio sources included in the audio signal (or content, etc.). Meanwhile, the description above assumes that sound is output using content having the plurality of audio sources (i.e., plurality of channels), and the present disclosure is not limited thereto. In detail, if content having a single audio source is input, the electronic apparatus 100 may perform the same operation as in the present disclosure by generating the audio signal having the plurality of channels using an up-mix method.

The channel role may be set assuming that a user is located in front of the electronic apparatus 100 (or in a predetermined listening region), and if the electronic apparatus includes two speakers and the speaker uses a general channel role, the left speaker may output the audio signal of the left channel, and the right speaker may output the audio signal of the right channel. Accordingly, the user located in front of the electronic apparatus 100 may enjoy three-dimensional sound. Here, the front refers not only to the exact 0 degrees forward centered on the electronic apparatus, but also to a position where the user may listen to surround sound output through the plurality of speakers in a three-dimensional manner.

Here, the audio signal may not only be an analog signal, but also be a digital type audio frame. That is, the audio signal in the present disclosure may also be referred to as an audio frame, etc.

Meanwhile, if a user location 10 is in a region that is not in front of the electronic apparatus but is biased to a right side thereof (in detail, a location away from the predetermined listening region), acoustic energy may be concentrated in a location where the user is not present, or the user may not be able to listen to main channel sound well from a current user location 10'. In addition, if a plurality of users are located in front of the electronic apparatus 100 to be spaced apart from each other, the users may have different listening states of the main channel sound.

The present disclosure describes a method of adjusting the channels respectively output through the plurality of speakers by using not only the channel role based on a speaker location but also the channel role based on the user location.

Here, the channel role may include information on channel information to be output through each speaker, and may be referred to as mapping information, channel information, rule information, or the like. In addition, the channel role described above may include not only the mapping information of each speaker, but also information on a playback bandwidth, a level, a gain, or the like of the audio signal.

For ease of explanation, the description below describes that the channel role is used based on the user location. However, the new channel role described above may be used based not only on the user location (direction and/or distance), but also on a user selection (or setting). That is, a change in the channel role may be applied automatically by detection of the user location, or may be performed by manual manipulation such as the user selection.

Meanwhile, the description describes a case where three speakers are provided with reference to FIG. 1. However, in implementation, the description may be applied to a case where two speakers are provided, or a case where four or more speakers are provided.

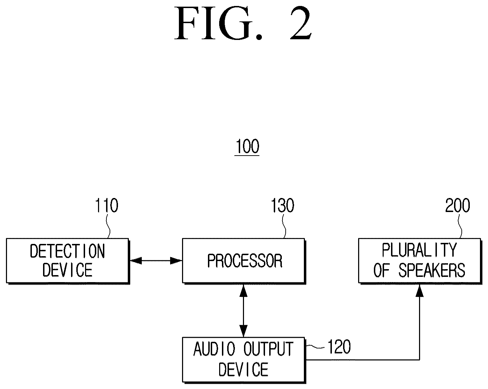

FIG. 2 is a block diagram showing a configuration of the electronic apparatus according to one or more embodiments of the present disclosure.

Referring to FIG. 2, the electronic apparatus 100 may include a detection device 110, an audio output device 120, a processor 130, and a plurality of speakers 200.

The detection device 110 may detect the user around the electronic apparatus. For example, the detection device 110 may include a camera, a time of flight sensor (TOF) sensor, a light detection and ranging sensor (LiDAR) sensor, a microphone, an ultra-wideband communication device (UWB) communication device, or the like, and may detect the user by using the above-described sensor or the like.

For example, if the detection device 110 includes the camera, the detection device 110 may identify the user location by using an image captured by the camera to analyze in which region of the captured image the user is located. Here, if the user is not located in the captured image, the detection device 110 may check that the user is not present in the predetermined listening region (or front) of the electronic apparatus 100. In this case, the detection device 110 may also use a previously-checked user location to check whether the user is currently located on a left side of the electronic apparatus or on a right side of the electronic apparatus.

In addition, the detection device 110 may use the image captured by the camera to check how many users exist in front of the electronic apparatus 100 (or the predetermined listening region) and in what form the plurality of users are located.

In addition, if the detection device 110 includes the microphone, the electronic apparatus 100 may check another sound generation location other than a user speech location or the sound output by the electronic apparatus 100, and detect the user location by using the checked location.

In addition, if the detection device 110 includes the position detection sensor such as the TOF sensor or the LiDAR sensor, the electronic apparatus 100 may use a location detected by the sensor.

In addition, if the detection device 110 includes the UWB communication device, the electronic apparatus 100 may communicate with a user terminal device carried by the user, and check a location of each user terminal device as the user location through the UWB communication device.

Meanwhile, the description above describes that the detection device 110 identifies the user location by using the sensor or the like provided in the electronic apparatus 100. However, in implementation, the detection device 110 may use location information identified by a separate device or server outside the electronic apparatus 100. In addition, the detection device 110 may identify the user location by using the plurality of sensors, that is, comprehensively using information collected by the plurality of sensors.

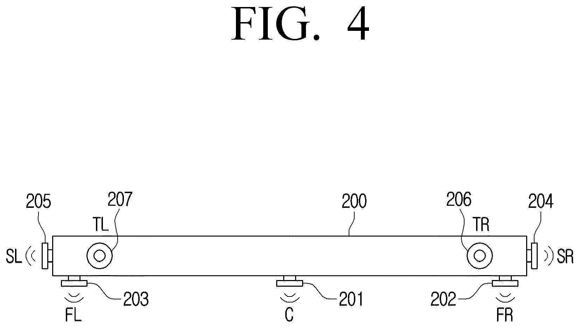

The plurality of speakers 200 may be disposed on a body of the electronic apparatus to be spaced apart from each other. For example, the plurality of speakers 200 may include the first speaker disposed in a left region of the electronic apparatus 100, and the second speaker disposed in a right region thereof. In addition, the speakers 220 may include three or more of the speakers. An arrangement form of the plurality of speakers 200 including seven speakers is described in detail with reference to FIG. 4. In this way, the electronic apparatus in the present disclosure may use at least two speakers capable of outputting stereo audio, and may also use more than two speakers.

The audio output device 120 may generate the audio signal to be provided to each of the plurality of speakers. In detail, if the audio output device 120 receives the audio signal (or audio data, content, or the like) including the plurality of channels, the audio output device 120 may separate the received audio signal into channel units.

Here, the audio signal including the plurality of channels that is input from the audio output device 120 may be a digital signal, and the audio signal output from the audio output device 120 may be the digital signal or an analog signal. In detail, if the signal output from the audio output device 120 is directly provided to the speaker, the signal output from the audio output device 120 may be the analog signal, and if the audio signal is output from a separate external device or the like, the signal output from the audio output device 120 may use the digital signal.

The audio output device 120 may also generate a channel audio signal that mixes some channels of the audio signal that includes the plurality of channels. For example, if a stereo audio signal is input, the audio output device 120 may mix the left audio signal and the right audio signal with each other to generate a mixed audio signal. In addition, if the audio signal of 5.1 channel or 7.1 channel is input, the audio output device 120 may use the mixed audio signal by using a front right (FR) audio signal and a front left (FL) audio signal. Alternatively, the audio output device 120 may down-mix the audio signal of 5.1 channel or 7.1 channel to the stereo audio signal, and mix the left audio signal and right audio signal of the down-mixed the audio signal to thus generate the mixed the audio signal.

Here, the audio output device 120 may adjust the playback bandwidth, level, gain, or the like of each of the generated audio signals. The separation operation or the like may be performed based on a currently applied channel role described below.

In addition, the audio output device 120 may provide the generated audio signal through at least one of the plurality of speakers. For example, if the electronic apparatus 100 is currently operated in a default mode (or the channel role corresponding to the speaker location), the audio output device 120 may output the audio signal based on the channel mapped through each speaker (i.e., the speaker and the channel which are mapped to first mapping information). For example, if the audio output device 120 uses the stereo audio signal, the audio output device 120 may output the left audio signal through the left speaker and the right audio signal through the right speaker.

Meanwhile, if the electronic apparatus 100 is operated in a mode based on the user location other than the default mode, the audio output device 120 may provide the left audio signal (or the right audio signal) through at least one speaker, and may provide no audio signal through the remaining speakers. Here, the speaker provided with the audio signal may be the speaker corresponding to the user location or close to the user. As sown in FIG. 4, if the electronic apparatus 100 includes the plurality of speakers disposed on its respective sides, the speakers to which the audio signal is transmitted may be the plurality of speakers corresponding to the respective sides.

Alternatively, the audio output device 120 may provide the mixed audio signal through the plurality of speakers in common. Here, providing in common indicates providing the same channel (i.e., mixed channel), and the audio signal provided to each speaker may have its bandwidth or gain adjusted based on a feature (or performance) of each speaker, even if the signal outputs the same channel. That is, even if the audio signal provided to each speaker has the common channel, the audio signal may have a different playback bandwidth, gain, level, etc.

The processor 130 may control overall operations of the electronic apparatus 100. In detail, the processor 130 may be connected to each component of the electronic apparatus 100 (e.g., detection device 110 or audio output device 120) and control the overall operations of the electronic apparatus 100.

The processor 130 may be implemented as the digital signal processor (DSP), the microprocessor, or the Time controller (TCON), which processes the digital signal. However, the processor 130 is not limited thereto, and may include one or more of a central processing unit (CPU), a micro controller unit (MCU), a micro processing unit (MPU), a controller, an application processor (AP), a graphics-processing unit (GPU), a communication processor (CP), or an ARM processor, or may be defined by a corresponding term thereof. In addition, at least one processor 130 may be implemented as a system on chip (SoC) or a large scale integration (LSI), in which a processing algorithm is embedded in, or may be implemented in the form of a field programmable gate array (FPGA). In addition, at least one processor 130 may perform various functions by executing a computer executable instruction stored in a memory. Meanwhile, at least one processor 130 may include a plurality of processors (e.g., CPU + DSP).

The processor 130 may control the audio output device to generate the audio signal corresponding to each speaker by using the mapping information of the channel to be output through each of the plurality of speakers. Here, the plurality of mapping information may be provided. For example, the mapping information may be the first mapping information generated based on the speaker location, or second mapping information generated based on the user location.

For ease of explanation, the description below describes assuming that the electronic apparatus includes two speakers (e.g., left speaker and right speaker).

The first mapping information may include information in which the left speaker outputs the left audio signal and the right speaker outputs the right audio signal.

Meanwhile, the second mapping information may include information in which the left speaker outputs the mixed audio signal that mixes the left audio signal and the right audio signal, and the right speaker outputs no audio signal if the user is located to be biased to the left side of the electronic apparatus, based on the user location.

Alternatively, the second mapping information may include information in which if the user is located to be biased to the right side of the electronic apparatus, the left speaker outputs no audio signal, and the right speaker outputs the mixed audio signal that mixes the left audio signal and the right audio signal.

In this way, the plurality of second mapping information may be used because the second mapping information may include different information based on the user location. In addition, in implementation, the mapping information may be used assuming that there are the plurality of users rather than one user. Hereinafter, this mapping information is referred to as third mapping information.

For example, if one of two users is located in front of the left speaker and the other is located in front of the right speaker, the third mapping information may include information in which both the left speaker and the right speaker output the mixed audio signal.

Meanwhile, the second and third mapping information may be generated in advance by a manufacturer and provided to the electronic apparatus 100, or may be generated by the user through editing or setting operations on a user interface device or the user terminal device.

In this way, if there are the plurality of mapping information, the processor 130 may determine which mapping information to use in case of requiring music playback, i.e., operation of the speaker. For example, the processor 130 may control the audio output device 120 to output the audio signal by using the first mapping information described above if it is determined that the user is located in front of the electronic apparatus and the electronic apparatus is required to be operated in a general mode (or normal mode).

Alternatively, if the processor 130 determines that it is necessary to use the second mapping information, the third mapping information, or the like, the processor 130 may control the audio output device 120 to output the audio signal through each speaker based on the determined mapping information.

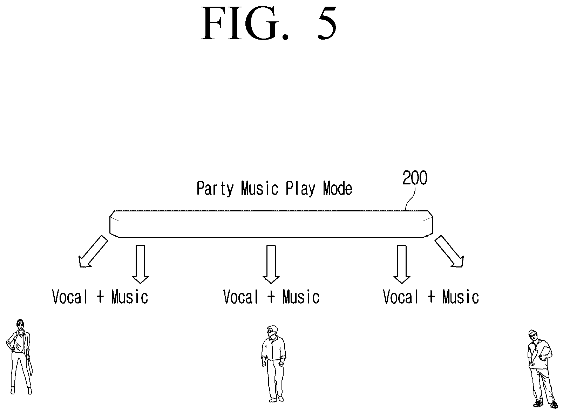

More detailed operations and embodiments of the processor 130 are described below with reference to FIGS. 5 to 10.

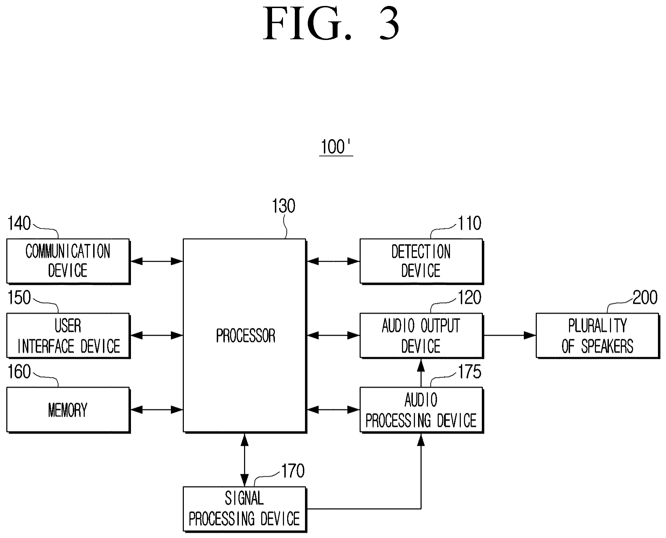

Meanwhile, the description describes that the audio output device performs all the operations of generating the audio signal and outputting the same through each speaker device with reference to FIG. 2. However, in implementation, the processor 130 may perform the operations of generating the audio signal or the like described above, and the audio output device may only perform its transmission to each speaker. In addition, the operation of the audio output device that is described above may be implemented by a plurality of components rather than one component. An example of this configuration is described below with reference to FIG. 3.

Meanwhile, hereinabove, a brief configuration of the electronic apparatus 100 is shown and described. However, in implementation, the electronic apparatus 100 may additionally use another configuration in addition to the configuration described above.

FIG. 3 is a block diagram showing a configuration of the electronic apparatus according to one or more embodiments of the present disclosure.

Referring to FIG. 3, the electronic apparatus 100 may include the detection device 110, the audio output device 120, the processor 130, the plurality of speakers 200, a communication device 140, a user interface device 150, a memory 160, and a signal processing device 170.

The configurations and operations of the detection device 110, the audio output device 120, the processor 130, and the plurality of speakers 200 are described above with reference to FIG. 2. Therefore, the description below describes only another case or an additional embodiment not described above with respect to the corresponding configurations.

The communication device 140 may be connect to at least one external host device or the Internet, and may be connected in a wireless or wired manner. The communication device 140 may receive content having sound from the external device. Here, the content may be audio content or radio content including only the audio signal, may be video content including the audio signal and an image signal, or may be game content. In addition, the content described above may be the audio signal having the plurality of channels, or also be the audio signal having only one channel. In this case, an audio processing device 175 described below may perform up-mix processing to thus generate the audio signal having the plurality of channels, thereby performing the operation described above.

The communication device 140 may communicate with another speaker device. In this case, the communication device 140 may transmit the audio signal to another speaker device. Here, the communication device 140 may transmit the audio content as it is to a corresponding speaker device, and provide information on the channel to be output through the corresponding speaker device among the corresponding content. Alternatively, the communication device 140 may also provide the audio signal to be output through the corresponding speaker device. Here, the communication device 140 may transmit the audio signal as it is or compress and transmit the same. In addition, the communication device 140 may not only communicate with one speaker device, but also communicate with the plurality of speaker devices.

For example, if the electronic apparatus 100 is the sound bar, the electronic apparatus 100 may receive the audio content (or the audio signal having the plurality of channels) from a display device such as a television (TV), operate the plurality of speakers by using the audio signal corresponding to a front channel among the received audio signal having the plurality of channels, and transmit the audio signal corresponding to a rear channel to another speaker device.

Here, the communication device 140 may provide an audio source or the audio signal to another speaker device by using a communication method such as Bluetooth, wireless fidelity (Wi-Fi), or Wi-Fi Direct.

The user interface device 150 may have a number of function keys that allow the user to set or select various functions supported by the electronic apparatus 100, and display various information provided by the electronic apparatus 100. The user interface device 150 may be implemented as a device that implements input and output simultaneously, such as a touchpad, and may further have a separate input device, such as a mouse or keyboard.

The user interface device 150 may display a user interface window for selecting content to be played from the user. The user may select the content to be played through the displayed user interface window.

In addition, the user interface device 150 may receive the selected mapping information to be used. Alternatively, the user interface device 150 may receive settings of the respective mapping information (for example, the channel to be output through each speaker).

Meanwhile, in implementation, the user interface device 150 disposed in the electronic apparatus 100 may be used to receive not only the settings of the mapping information and a manipulation of the electronic apparatus 100, but also receive the manipulation of the electronic apparatus and the setting of the mapping information from the user terminal device of the user, and receive the mapping information, a manipulation command, or the like through the communication device 140 described above.

The memory 160 may store data required for the various embodiments. The memory 160 may be implemented in the form of a memory embedded in the electronic apparatus 100 or may be implemented in the form of a memory that may be detachably attached to the electronic apparatus 100, based on a purpose of data storage.

For example, data for operating the electronic apparatus 100 may be stored in the memory embedded in the electronic apparatus 100, and data for expanding the function of the electronic apparatus 100 may be stored in the memory detachably attached to the electronic apparatus 100.

Meanwhile, the memory embedded in the electronic apparatus 100 may be implemented as at least one of a volatile memory (e.g., dynamic random access memory (RAM, DRAM), static RAM (SRAM), or synchronous dynamic RAM (SDRAM)), and a non-volatile memory (e.g., one time programmable read-only memory (ROM, OTPROM), programmable ROM (PROM), erasable and programmable ROM (EPROM), electrically erasable and programmable ROM (EEPROM), mask ROM, flash ROM, flash memory (e.g., NAND flash or NOR flash), hard drive, or solid state drive (SSD)).

In addition, the memory detachably attached to the electronic apparatus 100 may be implemented in the form of a memory card (e.g., compact flash (CF), secure digital (SD), micro secure digital (Micro-SD), mini secure digital (Mini-SD), extreme digital (xD), or multi-media card (MMC)), an external memory that may be connected to a universal serial bus (USB) port (e.g., USB memory), or the like.

The memory 160 may include various instructions necessary for the operation of the processor 130. In addition, the memory 160 may store the plurality of mapping information. Here, the mapping information may include the first mapping information provided by the manufacturer based on the speaker location (i.e., its location on the electronic apparatus), the mapping information generated based on the user location, the mapping information based on the plurality of user locations, or the like. The above-described mapping information may be referred to as an operation mode of the electronic apparatus, an output mode of the speaker, or the like because an output operation of the speaker may be different based on which mapping information is used.

The memory 160 may store the various contents. In detail, the memory 160 may store the content received through the communication device 140, and may also store the audio source data, the audio signal, or the like generated from the contents.

The signal processing device 170 may separate the audio signal, the image signal, or the like from a broadcast signal or the content. For example, if the electronic apparatus 100 directly receives the broadcast signal, the signal processing device 170 may transmit the separated image signal to the display device or the like, and provide the separated audio signal to the audio processing device 175 described below. Alternatively, in case of receiving the content in which images and voices are mixed with each other, the signal processing device 170 may extract the audio signal from the content and provide the same to the audio processing device 175 described below.

Meanwhile, the example shown in the drawing describes that the electronic apparatus 100 directly receives the content such as the broadcast signal and separating the image and the audio from the received content. However, this operation may be performed by a device other than the electronic apparatus 100, and the electronic apparatus 100 may also be operated by receiving the audio signal separated by the external device.

Here, the above-mentioned broadcast content, the audio signal, or the like may be input in the wired manner (e.g., high-definition multimedia interface (HDMI) or optical fiber) or the wireless manner (e.g., Wi-Fi or Bluetooth). In addition, the transmission of the image signal and the transmission of the audio signal to another device may also be transmitted in the wired and/or wireless manner.

The audio processing device 175 may perform signal processing such as audio decoding on the audio signal input from the signal processing device 170, and transmit the processed audio signal to the audio output device 120. Meanwhile, FIG. 2 shows that the audio output device 120 generates and outputs the audio signal to be provided to each speaker. However, in implementation, as shown in FIG. 3, the generation of the audio signal and the output of the audio signal may be performed by different components.

In addition, the audio processing device 175 may extract a sub-woofer audio signal from the processed audio signal. Here, the sub-woofer audio signal may be the audio signal of the low frequency region (e.g., 20 Hz to 1.5 KHz range) commonly included in the left audio signal and the right audio signal. The sub-woofer audio signal extracted in this way may be provided to a woofer speaker performing a woofer operation. That is, one of the plurality of speakers described above may be a woofer speaker that outputs the subwoofer audio signal.

The audio processing device 175 may perform various audio processing on the input audio signal. For example, the audio processing device 175 may perform the up-mix processing to convert the audio signal of one channel into the audio signal of the plurality of channels, or may perform down-mix processing to convert the audio signals of more than two channels into the audio signal of two surround channels. In addition, the audio processing device 175 can perform various signal processing related to the audio signal, such as sound field processing, level change, and gain change for the input audio content (or each audio signal), in addition to changing the number of channels as described above.

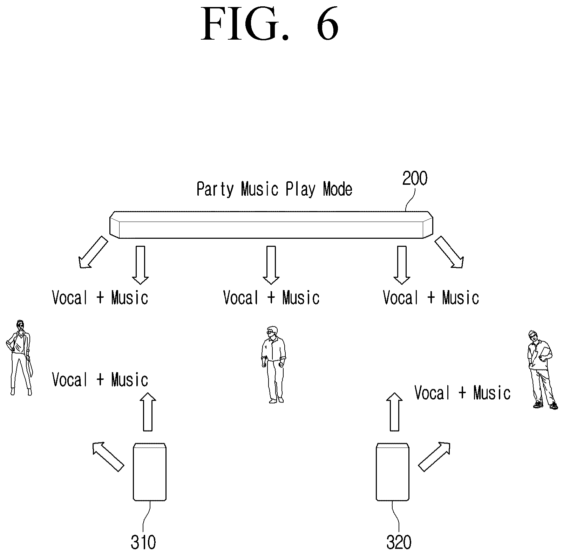

Meanwhile, the description below describes the operation of the processor 130 if the electronic apparatus 100 is operated in conjunction with a separate speaker device rather than being operated alone. For example, this operation is related to an embodiment described with reference to FIG. 6, 7, 8, 9, or 10 described below.

In this way, if the electronic apparatus 100 is operated in conjunction with another speaker device, the processor 130 may determine a channel to be output through each of the plurality of speakers as well as another speaker device connected thereto by using the mapping information.

For example, if it is determined that only one of the plurality of speakers and one speaker device are operated, the processor 130 may control the audio output device 120 to output the audio signal of the first channel among the plurality of channels through the determined speaker, and control the communication device to output the audio signal of the second channel among the plurality of channels through the speaker device.

For example, if the input audio signal is the stereo audio signal having two channels, the processor 130 may control the audio output device 120 and the communication device 140 to output the left audio signal through one of the speakers and output the right audio signal through one of the speaker devices. That is, the processor 130 may check the speaker and the speaker device, corresponding to the user location, control the audio output device 120 to output the left audio signal through the checked speaker, and control the communication device 140 to output the right audio signal through the checked speaker device.

Here, the processor 130 may control the communication device to transmit data corresponding to the audio signal of the second channel, or control the communication device 140 to transmit data corresponding to the audio signal of the plurality of channels and the channel information output from the plurality of channels. In addition, the data corresponding to the audio signal described above may be provided by a device other than the electronic apparatus 100 (e.g., server or TV), and the electronic apparatus 100 may only provide information such as the channel and a sound magnitude to be output through the corresponding speaker device.

Alternatively, the processor 130 may set at least one first speaker among the plurality of speakers and the speaker device as one speaker group based on a location of the speaker device, control the audio output device 120 to output the audio signal of the first channel among the plurality of channels through the first speaker, and control the communication device 140 to output the audio signal of the second channel among the plurality of channels through the speaker device.

Here, the processor 130 may also control the audio output device to output the audio signal of the plurality of channels through the remaining speakers that do not belong to the speaker group among the plurality of speakers as the mixed audio signal. Here, one or more speaker groups may be provided.

In addition, if the processor 130 checks that the user location detected by the detection device is checked to be spaced apart from the electronic apparatus 100 and close to a first speaker device and a second speaker device, the processor 130 may control the communication device 140 for the first speaker device to output the audio signal of the first channel among the plurality of channels, and the second speaker device to output the audio signal of the second channel among the plurality of channels. Here, the processor 130 may control the audio output device 120 to output no sound through the internal speaker of the electronic apparatus 100.

As described above, in the electronic apparatus 100 according to this embodiment, each speaker may not only output the audio signal of the channel mapped based on the speaker location but also output the sound based on the user location in various ways.

FIG. 3 shows a case where the electronic apparatus 100 includes additional components not shown in FIG. 2. However, in implementation, the electronic apparatus 100 may omit some of the additional components shown in FIG. 3. In addition, in implementation, the electronic apparatus 100 may further include another component not shown in FIG. 2 or 3.

FIG. 4 is a diagram showing an arrangement example of a plurality of speakers according to one or more embodiments of the present disclosure.

Referring to FIG. 4, the electronic apparatus 100 may include seven speakers. Although the example in the drawing only shows a case where seven speakers are provided, the present disclosure is not limited thereto, and the operation of the present disclosure may be applied if there are at least two or more speakers.

A first speaker 201 may be the speaker disposed in the center of the electronic apparatus 100. The first speaker 201 may be referred to as the center speaker, and may output the center channel (i.e., audio signal that mixes the left audio signal and the right audio signal, or voice region) in the normal mode (in case of using the first mapping information).

A second speaker 202 may be the speaker disposed on the right side of the electronic apparatus 100 toward the front of the electronic apparatus 100, and may be referred to as a front right (FR) speaker. The second speaker 202 may output the right channel (i.e., right audio signal) in the normal mode (in case of using the first mapping information).

A third speaker 203 may be the speaker disposed on the left side of the electronic apparatus 100 toward the front of the electronic apparatus 100, and may be referred to as a front left (FL) speaker. The third speaker 203 may output the left channel (i.e., left audio signal) in the normal mode (in case of using the first mapping information).

A fourth speaker 204 may be the speaker disposed on the right side of the electronic apparatus 100 toward the side of the electronic apparatus 100, and may be referred to as a surround right (SR) speaker. The fourth speaker 204 may output the right channel (i.e., right audio signal) in the normal mode (in case of using the first mapping information). In addition, the fourth speaker 204 may output a specific audio component from the right channel. For example, the user may listen to the sound output from the fourth speaker 204 after sound hits a wall or the like, and this sound may give the user a sense of three-dimensionality. In addition, sound that gives this sense of three-dimensionality may be usually ambient sound, which may be an audio component that excludes a voice component from the right audio signal.

The fifth speaker 205 may be the speaker disposed on the left side of the electronic apparatus 100 toward the side of the electronic apparatus 100, and may be referred to as a surround left (SL) speaker. The fifth speaker 205 may output the left channel (i.e., left audio signal) in the normal mode (in case of using the first mapping information). In addition, the fifth speaker 205 may output a specific audio component (e.g., ambient component) from the left channel.

A sixth speaker 206 may be disposed on the right side of the electronic apparatus 100 toward the top of the electronic apparatus 100, and may be referred to as a top right (TR) speaker. The sixth speaker 206 may output the right channel (i.e., right audio signal) in the normal mode (in case of using the first mapping information). Here, the sixth speaker 206 may output the specific audio component (e.g., ambient component) from the right channel.

The seventh speaker 207 may be the speaker disposed on the left side of the electronic apparatus 100 toward the top of the electronic apparatus 100, and may be referred to as a top left (TL) speaker. The seventh speaker 207 may output the left channel (i.e., right audio signal) in the normal mode (in case of using the first mapping information). Here, the seventh speaker 207 may output the specific audio component (e.g., ambient component) from the right channel.

The description above describes the information on the channel output through each speaker. However, in implementation, each speaker may use a different audio signal. For example, the description describes that each of the second speaker 202, the fourth speaker 204, and the sixth speaker 206 outputs sound by using the right audio signal. However, the audio signal provided to each speaker may have different playback bandwidth, level, gain features, or the like. In addition, the third speaker 203, the fifth speaker 205, and the seventh speaker 207 that use the left audio signal may also have different playback bandwidth, level, gain features, or the like.

In addition, if the electronic apparatus 100 is in the mode other than the normal mode, the electronic apparatus 100 may use a mapping method corresponding to the user location or the user selection instead of using the mapping information (or the channel role) based on the location of each speaker.

For example, if the user is disposed to be biased to the left side, the electronic apparatus 100 may be operated using only the speaker disposed on the left side (e.g., third speaker 203, fifth speaker 205, or the seventh speaker 207). Alternatively, if the user is disposed to be biased to the right side, the electronic apparatus 100 may be conversely operated using only the speaker disposed on the right side (second speaker 202, fourth speaker 204, or the sixth speaker 206).

Meanwhile, in implementation, other speakers may also output sound in addition to the speakers that perform the above-described operations. In this case, the remaining speakers may output the audio signal based on the mapping information (i.e., channel role) based on the speaker location and the other mapping information. For example, if the user is located on the left side, and audio of the main channel is thus output by using the third speaker 203, the fifth speaker 205, and the seventh speaker 207, the second speaker 202, the fourth speaker 204, and the sixth speaker 206 may output additional channels (rear and surround channels) or output mixed ambient audio signals.

In addition, if the plurality of users are located, the electronic apparatus 100 may enable the plurality of speakers to each provide the audio signal that mixes both the left and right channels, or may group each speaker and new speakers into a new group and output the audio signal of a different channel for each group. These various operations of the electronic apparatus 100 are described below with reference to FIGS. 5 to 10.

FIG. 5 is a diagram showing a channel mapping example according to one or more embodiments of the present disclosure. In detail, FIG. 5 shows an example where the plurality of users listen to sound.

Referring to FIG. 5, it may be checked that the plurality of users exist in a space where the electronic apparatus 100 is disposed, and the plurality of users are located to be spaced apart from each other. In this way, if the plurality of users are spaced apart from each other rather than being clustered in front of the electronic apparatus 100, only the users located in front of the electronic apparatus 100 may listen to the three-dimensional sound, and the users who are not located in front may have difficulty in listening to the three-dimensional sound. Alternatively, the user may want to listen to the same quality of sound rather than listening to the three-dimensional sound.

In such an environment, if the plurality of users are detected to be spaced apart from each other as shown in the drawing, or if an operation command to a party mode is input from the user, the electronic apparatus 100 may enable each speaker to output the audio signal of the same channel (e.g., channel that mixes the left audio channel and the right audio channel).

In this way, the mode in which each speaker outputs the same channel may be referred to as the party mode, and the party mode described above may be referred to by various expressions such as a common mode or the same channel mode.

Here, the electronic apparatus 100 may individually control the magnitude and bandwidth of sound output through each speaker by considering each speaker and each user location while using the same channel.

For example, if a distance between the user located in an outer part and the electronic apparatus is far from each other although a distance between the user located in the center and the speaker is close to each other, the electronic apparatus 100 may enable sound output through the right or left speaker to be louder than sound output through the center speaker.

In this way, the plurality of speakers may output the main channel without distinguishing the main channel and the surround channel from each other, and all the users may listen to sound in a balanced manner.

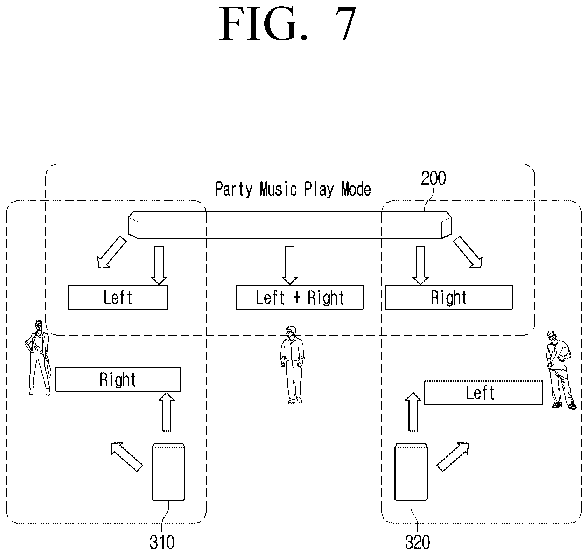

The electronic apparatus 100 is shown and described as controlling only the plurality of internal speakers. However, the electronic apparatus 100 may also control the external speaker device. Such an embodiment is described below with reference to FIGS. 6 and 7.

FIG. 6 is a diagram showing a channel mapping example according to one or more embodiments of the present disclosure. In detail, FIG. 6 shows an example of a case where the plurality of users listen to sound.

Referring to FIG. 6, it may be checked that two speaker devices 310 and 320 are external to the electronic apparatus 100 and are further located in the space where the electronic apparatus 100 is disposed.

The two speaker devices 310 and 320 may be the speaker devices physically spaced apart from the electronic apparatus 100 and may be devices that receive the audio source or the audio signal from the electronic apparatus 100 and output the same in the general mode. That is, the electronic apparatus 100 and the two speaker devices 310 and 320 may be operated as one home theater. Meanwhile, the example shown in the drawing shows that only two speaker devices are added. However, in implementation, three or more speaker devices may be added.

In this way, in case of being operated in the general channel role in an environment where the electronic apparatus 100 and the plurality of speakers 310 and 320 exist, the electronic apparatus 100 may output the audio signal corresponding to the rear channel among the audio signals having the plurality of channels.

However, as in the example shown in the drawing, if the plurality of users are spaced apart from each other in the space, it is difficult for the plurality of users to listen to the same sound.

Therefore, the electronic apparatus 100 may enable the plurality of speakers and the plurality of speaker devices to output the same channel upon detecting that the plurality of users are spaced apart from each other, or based on a user command.

Meanwhile, the electronic apparatus 100 and the speaker devices 310 and 320 are described as using the audio signal of the same channel. However, the provided audio signal itself may be different based on the features of each speaker device and the speaker. That is, even in case of using the same channel, the audio signal provided to each speaker and/or the speaker device may have at least one different playback bandwidth, gain, or level.

Meanwhile, the description above describes an embodiment in which the plurality of speakers and the plurality of speaker devices use the audio signal of the same channel. However, in implementation, the plurality of speakers and the plurality of speaker devices may be controlled to locally output a surround audio signal. An embodiment of this case is described below with reference to FIG. 7.

FIG. 7 is a diagram showing a channel mapping example according to one or more embodiments of the present disclosure. In detail, FIG. 7 shows an example of a case where the plurality of users listen to sound.

Referring to FIG. 7, it may be checked that a speaker group is set for the plurality of speakers and the speaker devices 310 and 320 in the electronic apparatus 100.

For example, the electronic apparatus 100 may configure the left speaker and the left speaker device 310 as one first group. In this case, the electronic apparatus 100 may enable the left speaker to output the left audio signal and the left speaker device 310 to output the right audio signal. In this case, the users located on the left side may listen to surround sound. In addition, in implementation, conversely, the left speaker may output the right audio signal and the left speaker device 310 may output the left audio signal.

Here, the electronic apparatus 100 may set the left speaker and the left speaker device 310 as one group to thus output the surround audio signal, and a level between the two speakers to be the same.

For example, in case of being operated in the general channel role, the speaker device disposed at the rear may be set to output sound at a lower volume than the speaker disposed at the front. However, if the left speaker and the left speaker device 310 in a new group are operated at different volumes, it may be difficult for the user in the corresponding space to feel the sense of three-dimensionality. Therefore, the electronic apparatus 100 may enable the plurality of speakers included in one group to have the same feature (e.g., playback bandwidth, level, or gain) operated similarly.

In addition, the electronic apparatus 100 may configure the right speaker and the right speaker device 320 as a separate second group. In this case, the electronic apparatus 100 may enable the right speaker to output the right audio signal and the right speaker device 320 to output the left audio signal. In this case, the user located on the right side may listen to stereo sound. Meanwhile, in implementation, conversely, the right speaker may output the left audio signal and the right speaker device 320 may output the right audio signal.

In addition, the speaker that does not belong to the group (e.g., the center speaker) may output the mixed audio signal of the left audio signal and the right audio signal.

Meanwhile, for ease of explanation, the description above describes the operation of the case where the audio signal of the stereo channel including two channels is input. However, even if the audio signal or the like of 3.1 channel, 5.1 channel, or 7.1 channel is input, the electronic apparatus 100 down-mix the audio signal of more than the above-described two channels to the stereo channel of two channels to be operated as described above.

In addition, for ease of explanation, the description above describes that the plurality of speakers output sound by using one of the mixed audio signal, the left audio signal, or the right audio signal.

However, a speaker device of a specific purpose among the speaker of the electronic apparatus 100 or the speaker device may perform the operation without being affected by the above-described mapping. For example, the woofer speaker may be hardly affected by its location, and the operation based on the general channel role may thus be performed on the woofer speaker even if the above-described mapping is performed on the specific speaker.

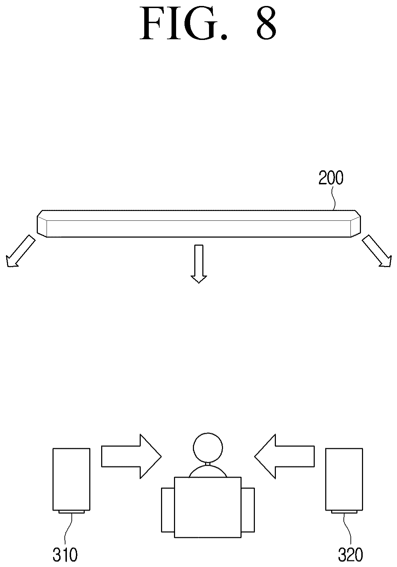

FIG. 8 is a diagram showing a channel mapping example according to one or more embodiments of the present disclosure. In detail, FIG. 8 shows a channel mapping example in which the plurality of speaker devices 310 and 320 may be operated in conjunction with the electronic apparatus.

Referring to FIG. 8, it may be checked that the electronic apparatus 100 is disposed in front of the user, and the plurality of speaker devices 310 and 320 are disposed on the side or rear of the user.

The plurality of speaker devices 310 and 320 may be speaker devices that receive the audio signals from the electronic apparatus 100 in the normal mode and configure 5.1 channels, 7.1 channels, or the like that output the rear audio signals.

In this configuration, if the user selects a least interference mode or the like, or if the user is located to be closer to the plurality of speaker devices 310 and 320 rather than the electronic apparatus 100, the electronic apparatus 100 may prevent the plurality of internal speaker devices from outputting sound, and operate only the first speaker device 310 and the second speaker device 320 close to the user.

For example, the electronic apparatus 100 may output the left audio signal through the first speaker device 310 and the right audio signal through the second speaker device 320. That is, sound may be output only through the speaker that is close to the user.

In this way, if the user is closer to the first speaker device and the second speaker device, a rule of the main speaker may be changed from the internal speaker of the electronic apparatus 100 to the first speaker device 310 and the second speaker 320, and a dialogue and main sound may thus be delivered to the user more clearly.

Alternatively, the electronic apparatus 100 may maintain the operations of the first speaker device 310 and the second speaker device 320 as described above, while the plurality of speakers in the electronic apparatus 100 may output only the ambient component from the input audio signal.

Such an operation may be performed if the user selects the least interference mode or if sound is output at a predetermined time.

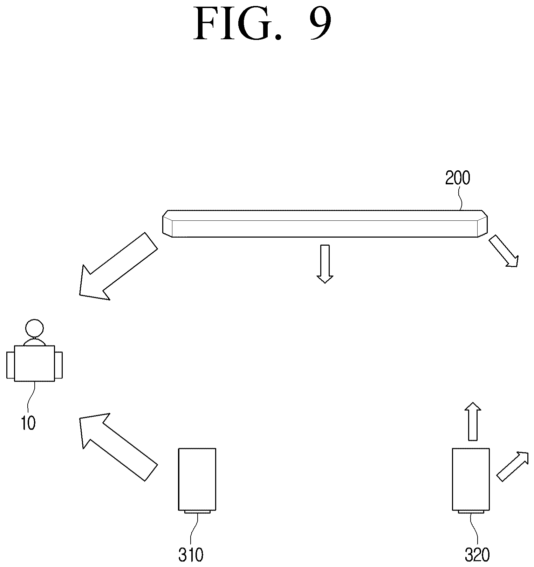

FIG. 9 is a diagram showing a channel mapping example according to one or more embodiments of the present disclosure. In detail, FIG. 9 shows a channel mapping example in which the plurality of speaker devices 310 and 320 may be operated in conjunction with the electronic apparatus.

The operations of the electronic apparatus and the plurality of speaker devices 310 and 320 in FIG. 9 is the same as FIG. 8. However, as shown in the drawing, it is assumed that the user enjoys sound from the user location biased to the left side.

In this way, if the user is located to be biased to the left side, the electronic apparatus 100 may output sound by using the speaker disposed on the left side and the first speaker device 310. For example, the left speaker and the first speaker device 310 may output the mixed audio signal of the same left audio signal and right audio signal.

Alternatively, the electronic apparatus 100 may control the left speaker of the electronic apparatus 100 to output the left side audio signal, and the first speaker device 310 to output the right audio signal. Alternatively, conversely, the electronic apparatus 100 may control the left speaker of the electronic apparatus 100 to output the right audio signal and the first speaker device 310 to output the left audio signal.

Meanwhile, an embodiment in FIG. 9 shows and describes that sound is output only by using the speaker disposed on the left side corresponding to the user location and the first speaker device 310. However, in implementation, other speakers in the electronic apparatus 100 may output sound. For example, other speakers may output additional channels (rear and surround channels) or may output the mixed ambient audio signals.

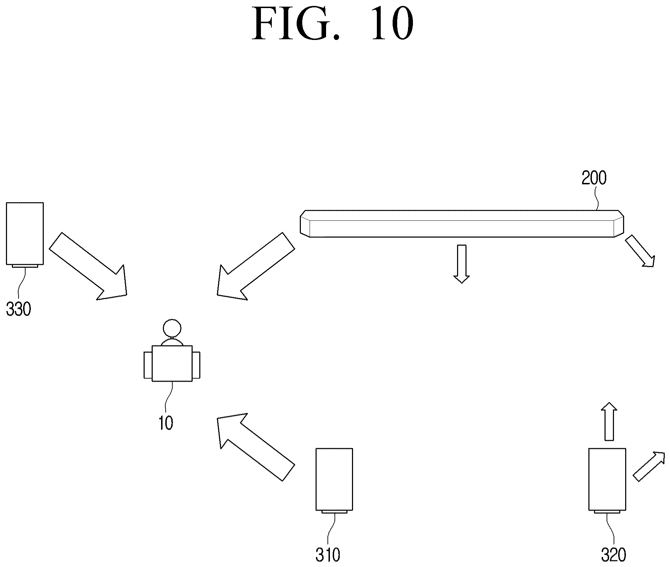

FIG. 10 is a diagram showing a channel mapping example according to one or more embodiments of the present disclosure. In detail, FIG. 10 shows a channel mapping example in which a plurality of speaker devices 310, 320, and 330 may be operated in conjunction with the electronic apparatus.

In FIG. 10, it may be checked that the third speaker device 330 is further provided, which is different from FIG. 9. Here, the third speaker device 330 may be a speaker device that is operated in conjunction with the electronic apparatus 100 only temporarily at a current time point rather than a device that is generally linked with the electronic apparatus 100 and outputs the audio signals such as 5.1 channel and 7.1 channel together. For example, the third speaker device 330 may be a Bluetooth speaker, an artificial intelligence (AI) speaker, or the like.

In this way, if the user is close to the third speaker device 330 and spaced apart from the first and second speaker devices 310 and 320, the electronic apparatus 100 may output sound by using the speaker disposed on the left side and the third speaker device 330. For example, the electronic apparatus 100 may enable the left speaker and the first speaker device 330 to output the mixed audio signal of the same left audio signal and right audio signal.

Alternatively, the electronic apparatus 100 may perform the control for the left speaker of the electronic apparatus 100 to output the left audio signal and the third speaker device 330 to output the right audio signal. Alternatively, the electronic apparatus 100 may perform the control conversely for the left speaker of the electronic apparatus 100 to output the right audio signal and the third speaker device 330 to output the left audio signal.

Here, the electronic apparatus 100 may acquire sound feature information of the third speaker device 330 to ensure the uniform sound output of the left speaker of the electronic apparatus 100 and the third speaker device 330, and may enable the internal speaker of the electronic apparatus 100 and the third speaker device 330 to be operated while having similar sound features based on the acquired sound feature information.

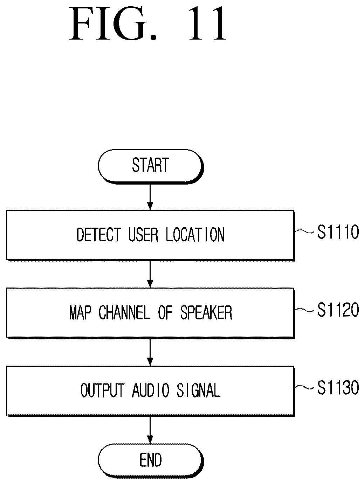

FIG. 11 is a flow chart showing a controlling method according to one or more embodiments of the present disclosure.

Referring to FIG. 11, the electronic apparatus may detect the user around the electronic apparatus (S1110). Such detection may be performed using sound, image analysis, LiDAR signals, or the like. In addition, such detection may be performed not only using the sensor in the electronic apparatus 100, but also using information detected by the external device.

In addition, the electronic apparatus may generate the audio signal to be provided to each of the plurality of speakers by using the mapping information of the channels to be output through each of the plurality of speakers (S1120). For example, the electronic apparatus may generate the audio signal to be provided to each speaker by selectively using one mapping information of the first mapping information provided based on the locations of the plurality of speakers or the second mapping information provided based on the user location, based on the detected user location.

For example, if the user location is detected by the detection device as being in front of the electronic apparatus (or in the normal mode), the electronic apparatus may generate the audio signal by using the first mapping information.

In addition, if the user is not detected in front of the electronic apparatus, the electronic apparatus may generate the audio signal by using the second mapping information to output the audio signal only through the speaker close to the user location.

For example, the electronic apparatus may include the first speaker disposed on the left side and the second speaker disposed on the right side. In this case, the electronic apparatus may generate the left audio signal and the right audio signal by using the stereo audio signal if the detected user location is in the predetermined listening region (or in front of the electronic apparatus), and generate the audio signal that mixes the left audio signal and the right audio signal if the detected user location is in a lateral region outside the predetermined listening region (e.g., left outer region or right outer region).

In addition, the electronic apparatus may output the generated audio signal through at least one of the plurality of speakers (S1130). For example, the electronic apparatus may include the first speaker disposed on the left side and the second speaker disposed on the right side. In this case, the electronic apparatus may output the left audio signal through the first speaker and the right audio signal through the second speaker if the user location is detected by the detection device as being in the predetermined listening region (or the front of the electronic apparatus), and output the mixed audio signal only through the first speaker if the detected user location is in the left outer region of the electronic apparatus.

Various embodiment in the present disclosure are directed to speakers, components, user locations, etc., being "close" to another speaker, component, user location, etc. Here, the term "close" may indicate that the speakers, components, user locations, etc., are within a predetermined range.

This output method or the like is an example, and use various forms based on various usage cases rather than the speaker location.

Meanwhile, the methods according to at least some of the various embodiments in the present disclosure described above may be implemented in the form of an application capable of being installed on a conventional electronic apparatus.

In addition, the methods according to at least some of the various embodiments in the present disclosure described above may be implemented only by the software or hardware upgrade of the conventional electronic apparatus.

In addition, the methods according to at least some of the various embodiments in the present disclosure described above may be performed through an embedded server disposed in the electronic apparatus, or at least one external server of the electronic apparatus.

Meanwhile, according to one or more embodiments of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus A) according to the disclosed embodiments. In case that the instruction is executed by the processor, the processor may directly perform a function corresponding to the instruction, or other components may perform the function corresponding to the instruction under a control of the processor. The instruction may include codes generated or executed by a compiler or an interpreter. The machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored. According to one or more embodiments, the methods according to the various embodiments disclosed in the present disclosure may be included in a computer program product and then provided. The computer program product may be traded as a product between a seller and a purchaser. The computer program product may be distributed in a form of the machine-readable storage medium (for example, a compact disc read only memory (CD-ROM)), or may be distributed online (e.g., downloaded or uploaded) through an application store (e.g., PlayStore^{™}) or directly between two user devices (e.g., smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The various embodiments of the present disclosure may be implemented by software including an instruction stored in the machine-readable storage medium (for example, the computer-readable storage medium). A machine may be an apparatus that invokes the stored instruction from the storage medium, may be operated based on the invoked instruction, and may include the electronic apparatus (e.g., electronic apparatus 100) according to the disclosed embodiments.

In case that the instruction is executed by the processor, the processor may directly perform a function corresponding to the instruction, or other components may perform the function corresponding to the instruction under the control of the processor. The instruction may include codes generated or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
a detection device configured to detect at least one user location;
a plurality of speakers spaced apart from each other;
an audio output device configured to generate audio signals; and
a processor configured to control the audio output device to:
based on the at least one user location detected by the detection device, select
mapping information for mapping at least one channel to be output through the plurality of speakers based on locations of the plurality of speakers, or
mapping information for mapping at least one channel to be output through at least one speaker of the plurality of speakers based on the at least one user location detected by the detection device,
generate, based on the selected mapping information, at least one audio signal to be output through at least one speaker of the plurality of speakers that is determined based on the selected mapping information, and
provide the generated at least one audio signal to the determined at least one speaker so that the generated at least one audio signal is output through the determined at least one speaker.

2. The electronic apparatus as claimed in claim 1, wherein the processor is configured to control the audio output device to:
based on the at least one user location detected by the detection device being in a predetermined listening region, select the mapping information for mapping the at least one channel to be output through the plurality of speakers based on locations of the plurality of speakers, and
based on the at least one user location detected by the detection device not being in the predetermined listening region, select the mapping information for mapping at least one channel to be output through at least one speaker of the plurality of speakers based on the at least one user location detected by the detection device.

3. The electronic apparatus as claimed in claim 2, wherein the processor is configured to, based on the at least one user location detected by the detection device not being in the predetermined listening region,
control the audio output device to generate, based on the selected mapping information, a mixed audio signal to be output through a speaker corresponding to the at least one user location detected by the detection device among the plurality of speakers, and provide the generated mixed audio signal to the speaker corresponding to the at least one user location detected by the detection device, and
control the audio output device so that no audio signal is output through remaining speakers of the plurality of speakers.

4. The electronic apparatus as claimed in claim 2, wherein the plurality of speakers include a first speaker on a left side of the electronic apparatus, and a second speaker on a right side of the electronic apparatus, and
the processor is configured to:
based on the at least one user location detected by the detection device being in the predetermined listening region, control the audio output device to generate an the audio signal of a left channel to be output through the first speaker, provide the generated audio signal of the left channel to the first speaker, generate an audio signal of a right channel to be output through the second speaker, and provide the generated audio signal of the right channel to the second speaker, and
based on the at least one user location detected by the detection device being in a left region outside of the predetermined listening region, control the audio output device to generate an audio signal that mixes the audio signal of the left channel and the audio signal of the right channel to be output through the first speaker, and provide the generated audio signal that mixes the audio signal of the left channel and the audio signal of the right channel to the first speaker, and control the audio output device so that no sound is output through the second speaker.

5. The electronic apparatus as claimed in claim 2, further comprising:
a communication device configured to communicate with a speaker device that is external to the electronic apparatus,
wherein the processor is configured to control the audio output device to, based on the at least one user location detected by the detection device not being in the predetermined listening region,
generate an audio signal of a first channel to be output through a speaker corresponding to the at least one user location detected by the detection device among the plurality of speakers, and provide the generated audio signal of the first channel to the speaker corresponding to the at least one user location detected by the detection device, and
generate an audio signal of a second channel to be output through the speaker device, and provide the generated audio signal of the second channel via the communication device to the speaker device.

6. The electronic apparatus as claimed in claim 5, wherein the processor is configured to control the communication device to transmit data corresponding to the generated audio signal of the second channel to the speaker device.

7. The electronic apparatus as claimed in claim 1, wherein
the at least one user location detected by the detection device incudes a plurality of user locations, and
the processor is configured to control the audio output device to:
based on the plurality of user locations detected by the detection device, select the mapping information for mapping at least one channel to be output through at least one speaker of the plurality of speakers based on the at least one user location detected by the detection device,
generate, based on the selected mapping information, a mixed audio signal that mixes a plurality of channels to be output through each speaker of the plurality of speakers, and
provide the generated mixed audio signal to each speaker of the plurality of speakers so that the generated mixed audio signal is output through each speaker of the plurality of speakers.

8. The electronic apparatus as claimed in claim 1, further comprising:
a communication device configured to communicate with a speaker device that is external to the electronic apparatus,
wherein the processor is configured to:
set the speaker device and at least one first speaker among the plurality of speakers as a speaker group based on a location of the speaker device, and
control the audio output device to
generate an audio signal of a first channel to be output through the at least one first speaker, and provide the generated audio signal of the first channel to the at least one first speaker,
generate an audio signal of a second channel to be output through the speaker device, and provide the generated audio signal of the second channel, via the communication device, to the speaker device, and
generate a mixed audio signal that mixes the first channel and the second channel to be output through remaining speakers that do not belong to the speaker group among the plurality of speakers, and provide the mixed audio signal to the remaining speakers.

9. The electronic apparatus as claimed in claim 1, further comprising:
a communication device configured to communicate with each of a first speaker device and a second speaker device that are external to the electronic apparatus,
wherein the processor is configured to control the audio output device to, based on the at least one user location detected by the detection device being spaced apart from the electronic apparatus and close to the first speaker device and the second speaker device,
generate an audio signal of a first channel to be output through the first speaker device and provide, via the communication device, the audio signal of the first channel to the first speaker device, and
generate an audio signal of a second channel to be output through the second speaker device and provide, via the communication device, the audio signal of the second channel to the second speaker device.

10. The electronic apparatus as claimed in claim 9, wherein the processor is configured to control the audio output device to, based on the at least one user location detected by the detection device being spaced apart from the electronic apparatus and close to the first speaker device and the second speaker device, output no sound through the plurality of speakers.

11. The electronic apparatus as claimed in claim 1, wherein the mapping information for mapping at least one channel to be output through the plurality of speakers based on locations of the plurality of speakers, and the mapping information for mapping at least one channel to be output through at least one speaker of the plurality of speakers based on the at least one user location detected by the detection device, each include at least one of playback bandwidth information, level information, or a gain feature to be output through each of the plurality of speakers.

12. The electronic apparatus as claimed in claim 1, wherein the detection device includes at least one of a microphone that detects a user location based on a user speech location, a camera, an ultra-wideband communication device (UWB) communication device that communicates with a user terminal device, or a light detection and ranging sensor (LiDAR) sensor.

13. A method for controlling an electronic apparatus that includes a detection device configured to detect at least one user location, a plurality of speakers spaced apart from each other, and an audio output device configured to generate audio signals, the method comprising:
controlling the audio output device to:
based on the at least one user location detected by the detection device, select
mapping information for mapping at least one channel to be output through the plurality of speakers based on locations of the plurality of speakers, or
mapping information for mapping at least one channel to be output through at least one speaker of the plurality of speakers based on the at least one user location detected by the detection device,
generate, based on the selected mapping information, at least one audio signal to be output through at least one speaker of the plurality of speakers that is determined based on the selected mapping information, and
provide the generated at least one audio signal to the determined at least one speaker so that the generated at least one audio signal is output through the determined at least one speaker.

14. A non-transitory computer-readable recording medium which stores a program for executing a process for controlling an electronic apparatus that includes a detection device configured to detect at least one user location, a plurality of speakers spaced apart from each other, and an audio output device configured to generate audio signals, the process including:
controlling the audio output device to:
based on the at least one user location detected by the detection device, select
mapping information for mapping at least one channel to be output through the plurality of speakers based on locations of the plurality of speakers, or
mapping information for mapping at least one channel to be output through at least one speaker of the plurality of speakers based on the at least one user location detected by the detection device,
generate, based on the selected mapping information, at least one audio signal to be output through at least one speaker of the plurality of speakers that is determined based on the selected mapping information, and
provide the generated at least one audio signal to the determined at least one speaker so that the generated at least one audio signal is output through the determined at least one speaker.
